# EUROPEAN PATENT SPECIFICATION

(11) **EP 3 777 532 B1**
(45) Date of publication and mention of the grant of the patent: **18.12.2024**
(21) Application number: 18913741.7
(22) Date of filing: 05.10.2018
(51) Int. Cl.: A01M 17/00, B05B 17/00, F25D 3/12, A01M 1/20

(54) **CO2 SATURATION DEVICE FOR THE APPLICATION OF SNOW**
CO2 -SÄTTIGUNGSVORRICHTUNG ZUM AUFBRINGEN VON SCHNEE
DISPOSITIF DE SATURATION DE CO2 POUR L'APPLICATION DE NEIGE

(30) Priority: 04.04.2018 CL 20180862
(43) Date of publication of application: 17.02.2021
(73) Proprietor: Fabrica de Maquinaria Industrial Nelson Alejandro Herrera Contreras Eirl., 1161 Temuco (CL)
(72) Inventor: HERRERA CONTRERAS, Nelson, 1161 Temuco (CL)
(74) Representative: Temiño Ceniceros, Ignacio
(86) International application number: PCT/IB2018/057762
(87) International publication number: WO 2019/193412

(56) References cited:
- EP-A1- 2 722 130
- MX-A- PA01 000 258
- US-A- 6 151 913
- US-A- 6 151 913
- US-B1- 6 491 231

## Description

### TECHNICAL FIELD

The present invention is related to the pest control and disinfection industry through a device that generates carbonic snow through CO₂ saturation for fumigation and disinfection.

### STATE OF THE ART

At present, the approach to the problem of the extermination of pests, disinfection and sterilization of surfaces is usually associated with the generation of humidity and toxic waste produced by the devices or the chemical products used.

A separate group is made up of the devices used for fumigation and disinfection of environments through applying carbon dioxide (CO₂). In summary, this technology generates a carbon dioxide snow which is formed by applying carbon dioxide (CO₂) on the surfaces, generating low temperatures at the point of application and allowing the elimination by freezing of pests, viruses and fungi, thus avoiding the generation of excessive humidity and toxic waste. Among the commercially available devices, it is known to adjust and apply the fluid to generate a cold mist with similar characteristics to that which can be obtained with the present proposal. However, such devices usually provide a constant scope of application, varying only the flow rate of CO₂. In addition to the above, it is observed that the existing devices have a high complexity, presenting a considerable number of parts and pieces, which makes the equipment very expensive.

Among the documents available in the prior art, the US patent no. US 6491231 B1 is cited, which describes a nozzle for producing snow from gases such as carbon dioxide, the nozzle extending from a discharge orifice followed by an elongated expansion gap, of uniform cross section, space within which flexible filaments are arranged as an obstruction to the flow path. An injector incorporating an obstruction or flow accelerating means is not taught. Furthermore, the disclosed discharge orifice location is separated from the outflow only by the expansion space.

Another revised document is Spanish patent No. ES 2267669T3, which presents an arrangement of nozzles for cooling in two phases. It mentions two groups of nozzles, at different distances from the target to be cooled, the nozzles of the first group are important in the initial phase of cooling, while those of the second group are important in a later cooling stage. However, it lacks teaching regarding specific means of increasing the speed and range of a carbon dioxide snow device as presented here.

In addition, reference is made to the Mexican application No. MXPA04012935A, which describes a series of theoretical aspects and recommended cooling application parameters, such as particle size and flow rate for an adequate elimination of different pests. But it lacks teaching of the specific means that constitute a device, injection nozzle or other constituent component.

### SOLUTION TO THE TECHNICAL PROBLEM

In order to correct the problem raised, a device is presented for the fumigation and disinfection of environments by applying carbon dioxide (CO₂), which presents a low complexity in terms of its physical characteristics, which leads to a considerable reduction in the parts and pieces that constitute the device. Also having an advantageous aspect associated with the device's flow control system, which allows it to generate a wide range of scope of the applied fluid, with a maximum distance of around 3.5 m.

### SUMMARY DESCRIPTION OF THE INVENTION

The present invention describes a CO₂ saturation device according to independent claim 1, for the application of carbon dioxide snow, which is intended to eliminate pests, fungi, viruses and bacteria and to disinfect and sterilize surfaces, owing to the low temperatures that a discharge fluid reaches on an area of application. The device comprises: an injector body with a straight internal tube that leads to three injection holes that exit into the inside of an evacuation duct joined to the injector body by the fitting of diameters; a coupling joined to the distal end of the evacuation duct and to an application extension by means of the fitting of diameters, the coupling joining a portion having a narrowed diameter in the central area thereof; an insulating chamber consisting of a container that surrounds the coupling and the evacuation duct, the difference between the diameter of the insulating chamber and those of the coupling and the duct being a separation for thermal insulation; an applicator connected to the distal end of the application extension, the applicator having a deflector that passes diametrically through the distal end of the applicator to direct the discharge fluid.

In another feature of the saturation device, the straight inner conduit of the injector body begins at a flow inlet end of the injector body connected to a control valve and ends at an obstructed end, and the injection holes provide fluid communication between said straight inner conduit. and the evacuation duct.

Furthermore, the saturation device is such that the injection holes are oriented in three directions at 120° to each other and pass through a cylindrical-conical shape injection surface at an angle of 45° with respect to the longitudinal axis. Wherein, the diameter of the injection holes is in the range of 1 to 4 mm, and preferably the diameter is 1 mm.

In a preferred aspect, in order to facilitate the use of the saturation device, the insulating chamber incorporates a handle.

### BRIEF DESCRIPTION OF THE DRAWINGS

The figures that accompany this specification represent some essential aspects and other aspects that are merely optional or by way of example, which will be addressed in the detailed description of the next item.
FIG. 1 is a perspective view of the present CO₂ saturator device for generating carbon dioxide snow.
FIG. 2 is a side view of the proximal portion of the device of the previous figure.
FIG. 3 is a longitudinal section view of the previous figure, in which item 70 has been omitted.
FIG. 4 is an exploded view of the device, in which item 70 has been omitted, in which a line of centers is shown crossing the components to represent both the cylindrical geometry and the order of assembly.
FIGS. 5A and 5B are side and front views of the injector body respectively.
FIG. 6 is a perspective view of the applicator, illustrating the diverter provided at the distal end thereof.
FIG. 7 shows the curve of temperature versus distance of CO₂ application obtained from laboratory tests of this device.

### DETAILED DESCRIPTION OF THE INVENTION

This invention shows the CO₂ saturation device for the application of carbon dioxide snow, hereinafter saturation device, with the main objective of eliminating pests, fungi, viruses and bacteria, in addition to achieving disinfection and sterilization of surfaces, due to at the low temperatures reached by the fluid used (CO₂) in the area of application.

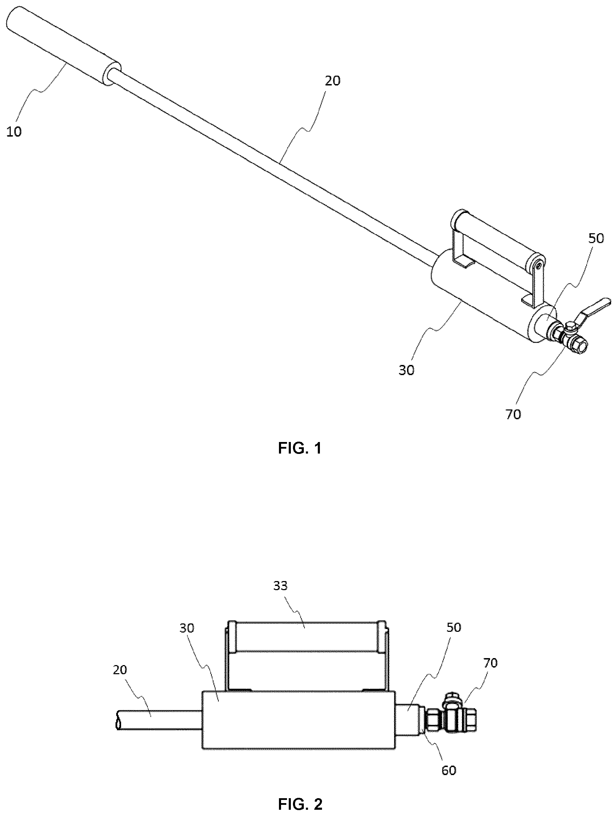

The saturation device, fully presented in FIG. 1, consists of a control valve, an injector body, an evacuation duct, a coupling, an insulating chamber, an application extension, and an applicator.

The control valve, as its name indicates, is an element that regulates the flow of carbon dioxide (CO₂), allowing control over the device by the operator, generating a greater opening of the passage generation of carbon dioxide snow at a lower application time. This valve can be implemented by means of a ball valve, gate valve or any other type known and compatible with the type of fluid and the outlet pressure from the compressed CO₂ containers; for this reason, the control valve is only represented in FIG. 1 being omitted from the detailed or section views.

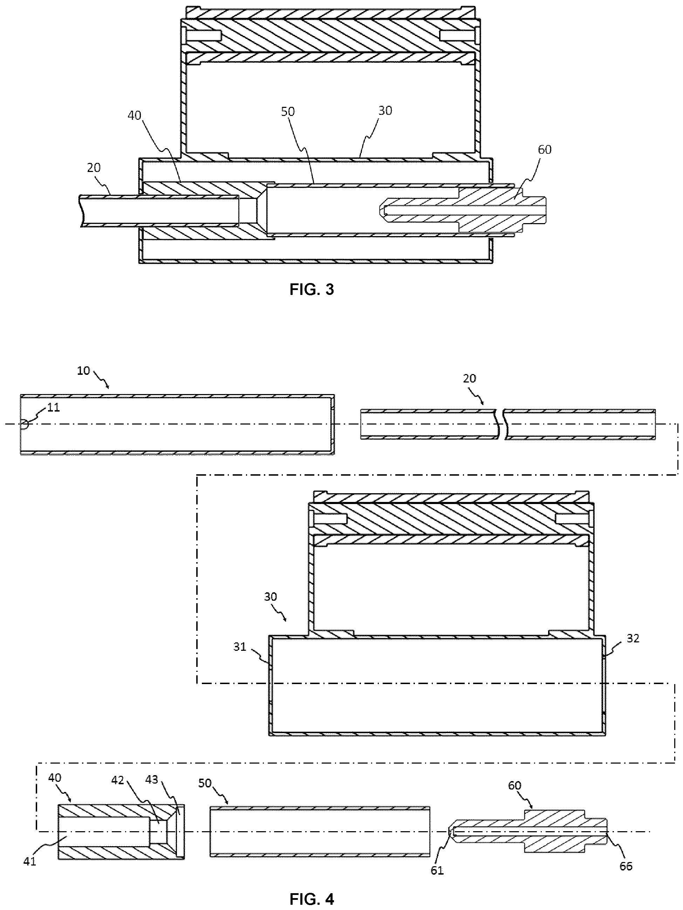

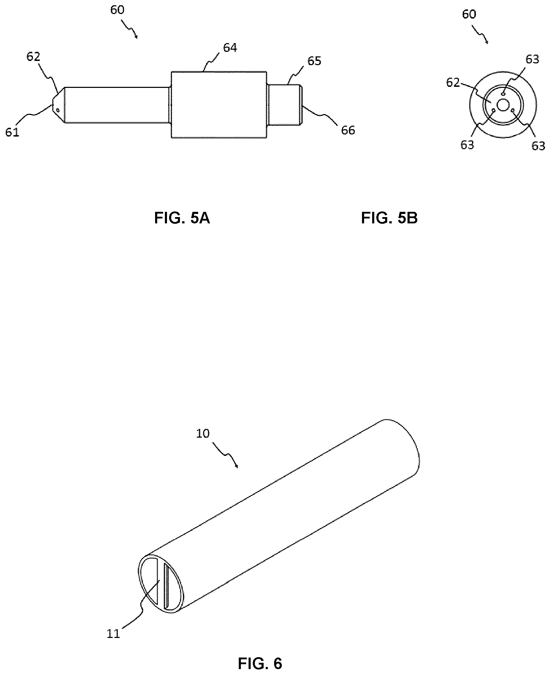

The injector body, represented in context in FIG. 3 and 4 and individually in FIG. 5A and 5B, is partially inside of the insulating chamber and adjusted in its sealing portion to the inside diameter of the evacuation duct. In FIG. 2 it is illustrated that in the flow direction it is downstream of the control valve, to which it is attached by a standard threaded connection (not shown) carried out in the coupling portion, by way of non-limiting example, by a 3/8 NPT union. In the injector body, an obstruction to the passage of the fluid is generated, since the straight interior conduit that begins at the flow inlet end is interrupted at the obstructed end, retention that is relieved by passing the fluid through 3 small holes, the injection holes, open in three directions at 120 ° to each other through a cylindrical-conical injection surface at an angle of 45 ° with respect to the longitudinal axis. The dimensions of the injection holes are restricted to a range of 1 to 4 mm in diameter.

The evacuation duct is a tubular element that extends from the outside of the end of the insulating chamber to the coupling inlet portion, through this component it is achieved that the fluid injected by the injector body continues its journey towards the outlet end of the Saturation device preventing it from having contact with the environment or possible leaks into the insulating chamber that imply a loss of thermal insulation that is achieved by the air located in the difference in diameters of both components.

The coupling is a cylindrical geometry element that is shown in the sectional views of FIG. 3 and 4, it is manufactured in a thermoplastic, such as polyamide, PA 6, PA66 or other polymers with similar characteristics to those mentioned and as its name indicates, it is a component that allows the union between the evacuation duct and the application extension, a union that is achieved through pressure adjustment due to the fit between the different diameters that these elements have, specifically, the inlet portion of the coupling with the evacuation duct and the outlet portion of the coupling with the application extension. On the other hand, due to a portion of diameter reduction, the coupling works as a nozzle, allowing an increase in the kinetic energy of the fluid to achieve a greater reach at the application moment. Concerning this last point, the variation in the reach of the carbon dioxide snow is achieved by manipulating the control valve incorporated in the inlet of the saturation device, so that when the fluid passes more, an increase in flow is generated that increases its product speed. of the nozzle effect that occurs both in the injection holes and in the diameter reduction portion of the coupling.

In another functional aspect of the coupling, due to its manufacture from a thermoplastic, such as a polyamide, PA 6, PA 66, or other polymers with characteristics similar to those mentioned, which allows generating thermal insulation in the joint. Insulation is necessary due to the high kinetic energy and low temperature that the fluid acquires as it passes through this component. On the contrary, if these joints were made directly between metallic materials, an effect of freezing the humidity of the air would be generated, which would lead to the production of ice inside the device, which would obstruct the passage of the fluid, presenting an intermittence in the constant flow of carbon dioxide. For this reason, this piece must be made of a polyamide, PA 6, PA 66, or other polymers with characteristics like those mentioned due to their low thermal conductivity.

The insulating chamber is a container that generates thermal insulation of the components described above with the outside, generating an interstitial air space that acts as a thermal insulator to prevent the operator from suffering accidents due to contact with elements at low temperatures. As shown in FIG. 3 and 4, the insulating chamber has a rear end with a hole whose diameter allows the entry of the assembled assembly formed by the application duct, coupling, evacuation duct, and injector body, while the front end of the insulating chamber has a hole whose diameter only allows the passage of the application extension. The difference in diameters between the hole at the rear end of the insulating chamber and the exhaust duct can be covered with an adjustment element, preferably with good thermal insulation properties, or by welding. Additionally, the insulating chamber incorporates a handle that provides comfort, ergonomics, and safety to the user incorporated, for example, a silicone or rubber grip.

The application extension, as its name indicates, generates an extension to the application range of the carbon dioxide flow, allowing easy access to the places of greatest difficulty and that the fumigation or disinfection does not leave spaces in which the carbon dioxide ice do not form.

The applicator is the last stage of the device in question, here the fluid comes with high kinetic energy and is directed by a diverter. As shown in FIG. 6, the diverter is a semicylindrical segment (optionally cylindrical, galvanized wire type, or similar) that diametrically traverses the distal end of the applicator. The shape and location of the diverter allow the carbon dioxide outflow to increase its diameter and consequently the coverage area.

Regarding materiality, the proposed device is manufactured in materials of high resistance and extensive durability, either using metals such as steel and bronze, how in turn, there are pieces -for example, the coupling- that are manufactured in high-strength technical polyamides such as PA6 or PA66, which is within the category of thermoplastics.

Considering the detailed descriptions above, it can be established that a CO₂ saturation device for the application of carbon dioxide snow, which is intended to eliminate pests, fungi, viruses, bacteria and the disinfection and sterilization of surfaces, owing to the low temperatures that reach a discharge fluid over an area of application, comprises: an injector body with a straight internal tube that at its distal end gives way to injection holes, which have an outlet into an evacuation duct, a duct that joins the injector body by adjustment of diameters; a coupling joined to the distal end of the evacuation duct and to an application extension by the fitting of diameters, wherein the coupling incorporates a portion having a narrowed diameter in the central area thereof; an insulating chamber consisting of a container that surrounds the coupling and the evacuation duct, where the difference in diameters of the insulating chamber and said coupling and duct constitutes a separation for thermal insulation; an applicator connected to the distal end of the application extension, wherein the applicator has a deflector that passes diametrically through the distal end of the applicator to direct the discharge fluid.

In another aspect of the saturation device, the straight inner conduit of the injector body begins at a flow inlet end of the injector body connected to a regulating valve and ends at an obstructed end, and the injection holes provide fluid communication between said straight internal tube and the evacuation duct.

Furthermore, the saturation device is such that the injection holes are oriented in three directions at 120 ° to each other and pass through a cylindrical-conical injection surface at an angle of 45 ° concerning the longitudinal axis. Wherein, the diameter of the injection holes is in the range of 1 to 4 mm.

In a preferred aspect, to facilitate the use of the saturation device safely by a user, the insolating chamber incorporates a handle. Additionally, the coupling is manufactured in a thermoplastic, such as a polyamide, PA 6, PA66, or other polymers with characteristics like those mentioned.

### EXAMPLE OF APPLICATION

A test set-up was used for the performance tests that included a saturation device with a distance of approximately 1 m between the injection holes and the flow outlet end, and injection holes of 1 mm diameter.

Regarding the performance analysis, it is determined that the saturation device presented is a watertight system, not showing leaks in joints or in the designed parts, thus supporting the pressure produced by the compressed fluid.

Due to the effect produced by the coupling which in turn acts as a nozzle, the carbon dioxide that passes through the saturation device obtains an increase in its kinetic energy allowing the gas flow at the applicator outlet to obtain a greater range and therefore a greater range of application, reaching a distance of approximately 3.5 m.

The carbon dioxide snow formation due to the saturation of carbon dioxide varies its coverage area according to the distance and time of application on a surface, see Table 1 below. In tests where the carbon dioxide flow was maintained for 20 seconds continuously on a surface, a temperature lower than -80 ° C was reached.

**Table 1: Carbon dioxide snow formation**

| Target distance [m] | Diameter of freezing area [cm] |
|---|---|
| 0,5 | 13 |
| 1,0 | 15 |
| 1,5 | 17 |

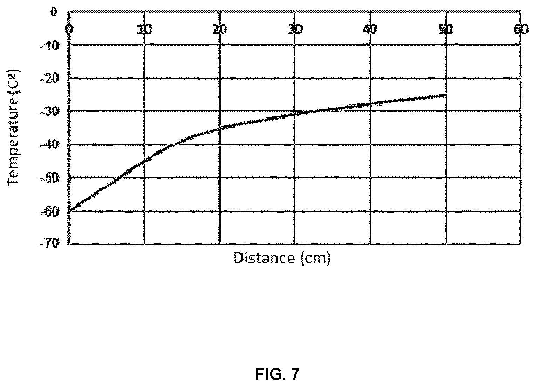

Regarding the temperature that the carbon dioxide snow reaches, tests were carried out that indicate this magnitude at different distances along the fluid from the outlet of the applicator of the saturation device, carrying out three measurements that are indicated in Table 2 and are represented in the graph of FIG. 7.

**Table 2: Fluid temperature at different distances**

| Distance (cm) | Temperature (°C) |
|---|---|
| 0 | -80 |
| 15 | -39 |
| 30 | -31 |
| 50 | -25 |

Regarding the mortality of pests, tests were carried out using several samples of insects or pests that are found in the different places needing periodic pest control. The treatment consists of applying carbon dioxide snow for 30 seconds in batches of 10 units for each sample, reaching average temperatures at -74 ° C in which the results detailed in Table 3 are obtained.

**Table 3: Mortality test results**

| Species | Habitat | Death rate |
|---|---|---|
| *Sitophilus granarius* | Pest in stored grains. | 100% |
| *Tribolium castaneum* | Primary pest in flours and other stored products. | 100% |
| *Macrosiphum* rosae | Important pest in rose bushes. | 100% |
| *Blatella germanica* | Plague in warehouses, restaurants, hospitals, etc. | 100% |
| *Blatta orientalis* | Plague in warehouses, restaurants, hospitals, etc. | 100% |
| Rhipicephalus sanguineus | Important parasite in dogs. | 100% |

### ADVANTAGES

The results obtained from the associated studies of the saturation device showed that this mechanism is a valid alternative for the elimination of mite and insect pests that are found in multiple places and environments in which hygiene requirements are critical, due to the fact that the time of application of carbon dioxide and the carbon dioxide snow formation, also known as carbon dioxide snow, does not give the target the necessary time for a physiological preparation that allows it to survive the low temperatures reached, which generates a high index mortality in these species.

On the other hand, applying this fluid to produce extreme cold avoids the generation of toxic residues that are currently left behind by the chemicals used in conventional fumigation methods.

Regarding the temperature reached by the fluid at the applicator outlet, an extreme (minimum) temperature of -80° C has been measured, decreasing the results indicated by other manufacturers by several tenths of a degree.

Finally, the materials for the manufacture of the device represent an advantage given their easy acquisition in the national market, presenting a decrease in the costs associated with the raw material and consequently the final value of the product.

### PARTS LIST

- 10: applicator
- 11: deflector
- 20: application extension
- 30: insulating chamber
- 31: front end of the insulating chamber
- 32: rear end of the insulating chamber
- 33: handle
- 40: coupling
- 41: coupling outlet portion
- 42: diameter reduction portion (of the coupling)
- 43: coupling inlet portion
- 50: evacuation duct
- 60: injector body
- 61: obstructed end (of the injector body)
- 62: injection surfaces (cylindrical-conical)
- 63: injection holes
- 64: sealing portion (of the injector body)
- 65: coupling portion (of the injector body)
- 66: flow inlet end (of the injector body)
- 70: control valve (flow)

## Claims

1. A CO₂ saturation device for the application of carbon dioxide snow, comprising:
an injector body (60) with a straight internal tube that leads to injection holes (63) that exit into the inside of an evacuation duct (50),
a coupling (40) joined to the distal end of the evacuation duct (50) and to an application extension (20), in which the coupling incorporating a portion having a narrowed diameter in the central area thereof;
an applicator (10) connected to the distal end of the application extension (20), wherein the applicator has a deflector that passes diametrically through the distal end of the applicator to direct the discharge fluid; and
being **characterized in that** it comprises an insulating chamber (30) consisting of a container that surrounds the coupling (40) and the evacuation duct (50), being a thermal insulator the interstitial air space generated between the insulating chamber (30) and those coupling (40) and evacuation duct (50).

2. The saturation device of claim 1, **CHARACTERIZED in that** the straight internal tube of the injector body (60) is connected to a regulating valve and has an obstructed end (61).

3. The saturation device of claim 2, **CHARACTERIZED in that** the straight internal tube comprises at least two injection holes (63) that pass through a cylindrical-conical injection surface (62).

4. The saturation device of claim 3, **CHARACTERIZED in that** the at least two holes are oriented equidistant from each other.

5. The saturation device of claim 3, **CHARACTERIZED in that** the diameter of the injection holes is in the range of 1 to 4 mm.

6. The saturation device of claim 1, **CHARACTERIZED in that** the insulating chamber (30) incorporates a handle (33).

7. The saturation device of claim 1, **CHARACTERIZED in that** the coupling (40) is manufactured in a thermoplastic, such as polyamide, PA6, PA66 or another polymer with characteristics similar to those mentioned.

## Patentansprüche

1. CO₂-Sättigungsvorrichtung zum Aufbringen von Kohlendioxidschnee, Folgendes umfassend:
einen Injektorkörper (60) mit einem geraden Innenrohr, das zu Injektionslöchern (63) führt, die in das Innere eines Entleerungskanals (50) münden,
eine Kupplung (40), die mit dem distalen Ende des Entleerungskanals (50) und mit einem Aufbringungsansatz (20) verbunden ist, wobei die Kupplung einen Abschnitt enthält, der in seinem mittleren Bereich einen verengten Durchmesser aufweist;
einen Applikator (10), der mit dem distalen Ende des Aufbringungsansatzes (20) verbunden ist, wobei der Applikator einen Ablenker aufweist, der diametral durch das distale Ende des Applikators hindurchgeht, um das Ausstoßfluid zu lenken; und
**dadurch gekennzeichnet ist, dass** sie eine Isolierkammer (30) umfasst, die aus einem Behälter besteht, der die Kupplung (40) und den Entleerungskanal (50) umgibt, wobei der Luftzwischenraum, der zwischen der Isolierkammer (30) und der Kupplung (40) und dem Entleerungskanal (50) entsteht, ein Wärmeisolator ist.

2. Sättigungsvorrichtung nach Anspruch 1, **dadurch gekennzeichnet, dass** das gerade Innenrohr des Injektorkörpers (60) mit einem Regelventil verbunden ist und ein verstopftes Ende (61) aufweist.

3. Sättigungsvorrichtung nach Anspruch 2, **dadurch gekennzeichnet, dass** das gerade Innenrohr mindestens zwei Injektionslöcher (63) umfasst, die durch eine zylindrisch-konische Injektionsfläche (62) hindurchgehen.

4. Sättigungsvorrichtung nach Anspruch 3, **dadurch gekennzeichnet, dass** die mindestens zwei Löcher in gleichem Abstand zueinander angeordnet sind.

5. Sättigungsvorrichtung nach Anspruch 3, **dadurch gekennzeichnet, dass** der Durchmesser der Injektionslöcher im Bereich von 1 bis 4 mm liegt.

6. Sättigungsvorrichtung nach Anspruch 1, **dadurch gekennzeichnet, dass** die Isolierkammer (30) einen Griff (33) enthält.

7. Sättigungsvorrichtung nach Anspruch 1, **dadurch gekennzeichnet, dass** die Kupplung (40) aus einem Thermoplast, wie z. B. Polyamid, PA6, PA66 oder einem anderen Polymer mit ähnlichen Eigenschaften wie den genannten, hergestellt ist.

## Revendications

1. Dispositif de saturation en CO₂ pour l'application de neige carbonique, comprenant :
un corps d'injecteur (60) doté d'un tube interne droit qui mène à des trous d'injection (63) qui sortent dans l'intérieur d'un conduit d'évacuation (50),
un raccord (40) uni à l'extrémité distale du conduit d'évacuation (50) et à un prolongement d'application (20), le raccord intégrant une partie ayant un diamètre rétréci dans sa zone centrale ;
un applicateur (10) relié à l'extrémité distale du prolongement d'application (20), l'applicateur ayant un déflecteur qui traverse diamétralement l'extrémité distale de l'applicateur pour diriger le fluide sortant ; et
**caractérisé en ce qu'**il comprend une chambre isolante (30) constituée d'un récipient qui entoure le raccord (40) et le conduit d'évacuation (50), l'espace d'air interstitiel formé entre la chambre isolante (30) et ces raccord (40) et conduit d'évacuation (50) étant un isolant thermique.

2. Dispositif de saturation selon la revendication 1, **caractérisé en ce que** le tube interne droit du corps d'injecteur (60) est relié à une vanne de régulation et a une extrémité obstruée (61).

3. Dispositif de saturation selon la revendication 2, **caractérisé en ce que** le tube interne droit comprend au moins deux trous d'injection (63) qui traversent une surface d'injection tronconique (62).

4. Dispositif de saturation selon la revendication 3, **caractérisé en ce que** les au moins deux trous sont disposés à égale distance les uns des autres.

5. Dispositif de saturation selon la revendication 3, **caractérisé en ce que** le diamètre des trous d'injection est dans la plage de 1 à 4 mm.

6. Dispositif de saturation selon la revendication 1, **caractérisé en ce que** la chambre isolante (30) intègre une poignée (33).

7. Dispositif de saturation selon la revendication 1, **caractérisé en ce que** le raccord (40) est constitué d'un thermoplastique, tel que du polyamide, PA6, PA66 ou un autre polymère doté de caractéristiques similaires à celles mentionnées.
